# EUROPEAN PATENT APPLICATION

(11) **EP 4 361 434 A1**
(43) Date of publication of application: **01.05.2024**
(21) Application number: 22383025.8
(22) Date of filing: 24.10.2022
(51) Int. Cl.: F03D 7/02

(54) **PROTECTION OF WIND TURBINE COMPONENTS DURING YAWING**

(71) Applicant: General Electric Renovables España S.L., 08005 Barcelona (ES)
(72) Inventor: MAYMO GARRIDO, Marc, 08005 BARCELONA (ES)
(74) Representative: de Rooij, Mathieu Julien

(57) **Abstract**

The present disclosure relates to methods (100, 200) for protecting one or more components of a wind turbine (10) during yawing of the wind turbine (10). The present disclosure further relates to wind turbines (10). A method (100) for protecting one or more components of a wind turbine (10) during yawing of the wind turbine (10) comprises monitoring (110) one or more parameters indicative of a yaw torque required to position a wind turbine rotor (18) with respect to a prevailing wind direction, detecting (120) that one or more of the parameters indicative of yaw torque reach or exceed a predetermined threshold, and in response to the detection, reducing (130) load imbalance in the wind turbine rotor (18).

## Description

The present disclosure relates to methods for protecting one or more wind turbine components during yawing of a wind turbine. The present disclosure further relates to wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbines usually comprise a yaw system for orienting the rotor of the wind turbine in the prevailing wind direction during operation. When operation is to be interrupted, the wind turbine rotor may be rotated away from the prevailing wind direction. Normally, when the rotor is aligned with the wind direction, the yaw system maintains the position by means of brakes, e.g. hydraulic brake calipers and/or electro-brakes of the yaw motors. These brakes can be activated and deactivated by the wind turbine control system.

During operation, the direction of the wind may change. When the wind turbine rotor is misaligned with respect to the wind direction, the yaw system rotates the nacelle about a longitudinal axis of the tower to reach an alignment with the wind. The determination that the nacelle and rotor are no longer aligned with the prevailing wind direction may be made based e.g. on a weather vane mounted on the nacelle. However, other methods based on measuring loads and/or oscillations are also known. Generally, the yaw system may be activated if the prevailing wind direction deviates from the rotor and nacelle orientation by more than a predefined threshold (e.g. 5°, 7°, or 10° or more) for at least a predetermined period of time. A predetermined period of time may be 1 minute, 5 minutes, 10 minutes or more. Seconds to minute averages, e.g. 3 second, 10 second, 1 minute, or 5 minute averages, may for example be determined to calculate the direction of the prevailing wind speed.

The yaw system normally performs this rotation of the nacelle by means of a yaw drive that includes a plurality of motors, e.g. electric or hydraulic motors, with suitable gearboxes for driving gears (pinions) that mesh with an annular gear or gear ring attached to the nacelle or to the wind turbine tower. The nacelle can thus be rotated around the tower's longitudinal axis in or out of the wind direction. The rotatable connection between the wind turbine tower and the nacelle is called a yaw bearing. The yaw bearing can be of the roller or gliding type.

During yawing, one or more of the wind turbine components may be at increased risk of damage or failure. For example, if the wind direction changes suddenly and/or if wind speed is too high or a wind gust occurs, one or more wind turbine components such as a wind turbine blade may end up breaking and therefore need replacement. Pitch drive systems, the yaw system and the nacelle frame may be specifically stressed during negative conditions during yawing. In some cases, negative conditions during yawing such as e.g. the aforementioned sudden change in wind direction may even prevent the alignment of the rotor with the wind direction.

Yawing may herein be regarded as a maneuver for orienting a part of the wind turbine that is rotatably mounted on the tower with respect to the prevailing wind direction. Typically, during operation, orienting or positioning the part of the wind turbine with respect to the prevailing wind direction means substantially aligning an axis of rotation of a wind turbine rotor with the prevailing wind direction. Any possible vertical inclination of the axis of rotation of the wind turbine may herein be disregarded. The part of the wind turbine that is rotatable with respect to the tower generally includes a wind turbine rotor and may include a nacelle.

### SUMMARY

In an aspect of the present disclosure, a method for protecting one or more components of a wind turbine during yawing of the wind turbine is provided. The method comprises monitoring one or more parameters indicative of yaw torque required to position a wind turbine rotor with respect to a prevailing wind direction, and detecting that one or more of the parameters indicative of yaw torque reach or exceed a predetermined threshold, and in response to the detection, reducing load imbalance in the wind turbine rotor.

According to this aspect, e.g. when a wind turbine is yawing, one or more parameters providing direct or indirect information about yaw torque may be monitored. When one or more parameters reach or exceed a certain threshold, load imbalance in the wind turbine rotor is reduced.

Therefore, as a protective action is triggered when a risk to the wind turbine is deemed too high, the risk of damage, breakage or failure of one or more wind turbine components while the wind turbine is in a yaw procedure may be reduced. As the integrity of one or more wind turbine components may be maintained because the stress to the wind turbine is reduced before damage is produced, the chances of successfully completing a yawing operation may also be increased. In addition, the service life of the one or more wind turbine components may be extended.

Throughout this disclosure, a predetermined threshold may be understood as a threshold of a corresponding parameter indicative of yaw torque that has been set in advance, e.g. before the wind turbine has started to operate for the first time and in any case before a yaw procedure is carried out. While a predetermined threshold is not reached or exceeded, e.g., while a measured or calculated value of a parameter indicative of yaw torque is below the threshold, the wind turbine may continue operation with normal or standard parameter settings. Reaching or exceeding a predetermined threshold, e.g. when a measured or calculated value of a parameter indicative of yaw torque reaches or exceeds the threshold, a protective action, namely reducing load imbalance in the wind turbine rotor, is triggered.

In a further aspect of the disclosure, a wind turbine is provided. The wind turbine comprises a tower, a nacelle rotatably mounted on top of the tower and a wind turbine rotor including a plurality of wind turbine blades. The wind turbine furthermore comprises a yaw system and the wind turbine is configured to perform the methods according to any of the examples described herein. For example, the wind turbine is configured to rotate the nacelle with respect to the tower to substantially align an axis of rotation of the wind turbine rotor with a prevailing wind direction, and to monitor, while rotating the nacelle, one or more parameters indicative of a yaw torque required to substantially align the axis of rotation of the wind turbine rotor with the prevailing wind direction. The wind turbine is further configured to detect that one or more of the parameters indicative of yaw torque reach or exceed a predetermined threshold, and in response to the detection, to reduce load imbalance in the wind turbine rotor.

Still in a further aspect of the disclosure, a method for operating a wind turbine is provided. The method comprises monitoring one or more yaw drives while the wind turbine is yawing. The method further comprises detecting that one or more of the yaw drives reach a predefined load limit. The method further comprises reducing loads on one or more of the yaw drives.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 schematically illustrates a top view of a wind turbine;
Figure 4 shows a flow chart of a method for protecting one or more components of a wind turbine during yawing of the wind turbine; and
Figure 5 shows a flow chart of a method for operating a wind turbine.

### DETAILED DESCRIPTION OF EXAMPLES

Reference now will be made in detail to embodiments, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

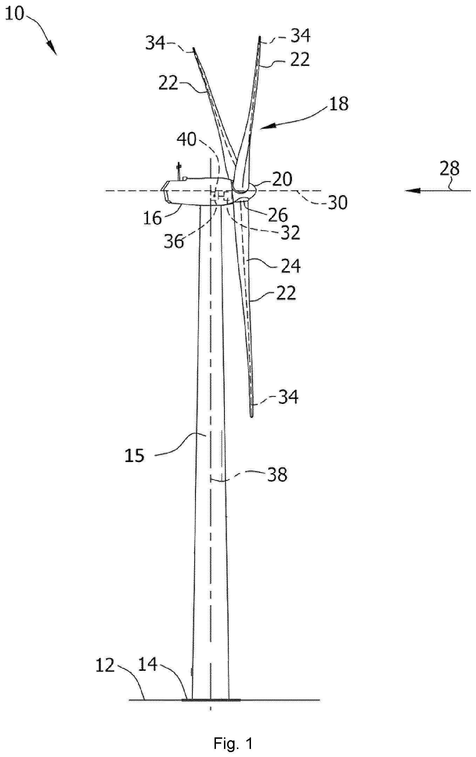

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power output by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 may include a processor 40 configured to perform some of the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

A control system 36 may also include a memory, e.g. one or more memory devices. A memory may comprise memory element(s) including, but not limited to, a computer readable medium (e.g., random access memory (RAM)), a computer readable non-volatile medium (e.g., a flash memory), a floppy disk, a compact disc-read only memory (CD-ROM), a magnetooptical disk (MOD), a digital versatile disc (DVD) and/or other suitable memory elements. Such memory device(s) may generally be configured to store suitable computer-readable instructions that, when implemented by the processor(s) 40, configure the controller 36 to perform, or trigger the performance of, various steps disclosed herein. A memory may also be configured to store data, e.g. from measurements and/or calculations.

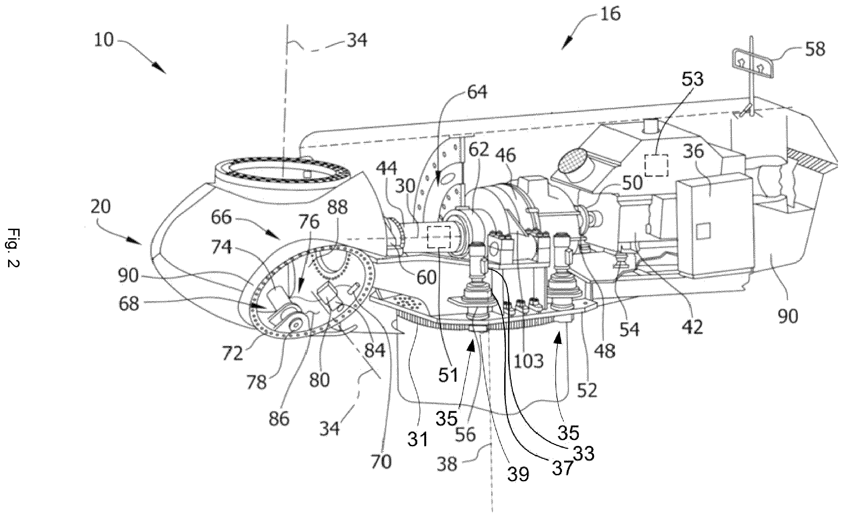

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (e.g. 10 - 35 KV). Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 also may include a yaw system which comprises a yaw bearing (not visible in figure 2) having two bearing components configured to rotate with respect to the other. The tower 15 is coupled to one of the bearing components and the bedplate or support frame 52 of the nacelle 16 is coupled to the other bearing component.

The yaw system may comprise an annular gear 31 and a yaw drive mechanism 56 that may be used to rotate the nacelle 16 and thereby also the rotor 18 about the yaw axis 38 to control the perspective of the rotor blades 22 with respect to the wind direction 28.

The yaw drive mechanism 56 may comprise a plurality of yaw drives 35 with a motor 33, a gearbox 37 and a pinion 39 for meshing with the annular gear 31 for rotating one of the bearing components with respect to the other. The annular gear 31 may comprise a plurality of teeth which engage with the teeth of the pinion 39. In the example of figure 2, the yaw drives 35 and the annular gear 31 are placed outside the external diameter of the tower. The teeth of the annular gear are outwardly orientated, but in other examples, the annular gear and yaw drives may be arranged at the inside of the tower.

In some examples, one of the yaw drives may be a "master", and the other drives may be "slaves" following the instructions of the master or adapting their operation to adapt to the master drive.

The turbine controller 36 may be communicatively coupled to the yaw drive mechanism 56 of the wind turbine 10 for controlling and/or altering the yaw direction of the nacelle 16 relative to the wind direction 28. As the direction of the wind 28 changes, the wind turbine controller 36 may be configured to control a yaw angle of the nacelle 16 about the yaw axis 38 to position the rotor blades 22, and therefore the rotor 18, with respect to the direction 28 of the wind, thereby controlling the loads acting on the wind turbine 10. For example, the turbine controller 36 may be configured to transmit control signals or commands to the yaw drive mechanism 56 of the wind turbine 10, via a yaw controller or direct transmission, such that the nacelle 16 may be rotated about the yaw axis 18 via a yaw bearing.

For positioning the nacelle 16 appropriately with respect to the wind direction 28, the nacelle 16 may also include at least one meteorological measurement system which may include a wind vane and anemometer. The meteorological measurement system 58 can provide information to the wind turbine controller 36 that may include wind direction 28 and/or wind speed.

In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angel of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer surface of hub 20 and may be coupled, directly or indirectly, to the outer surface.

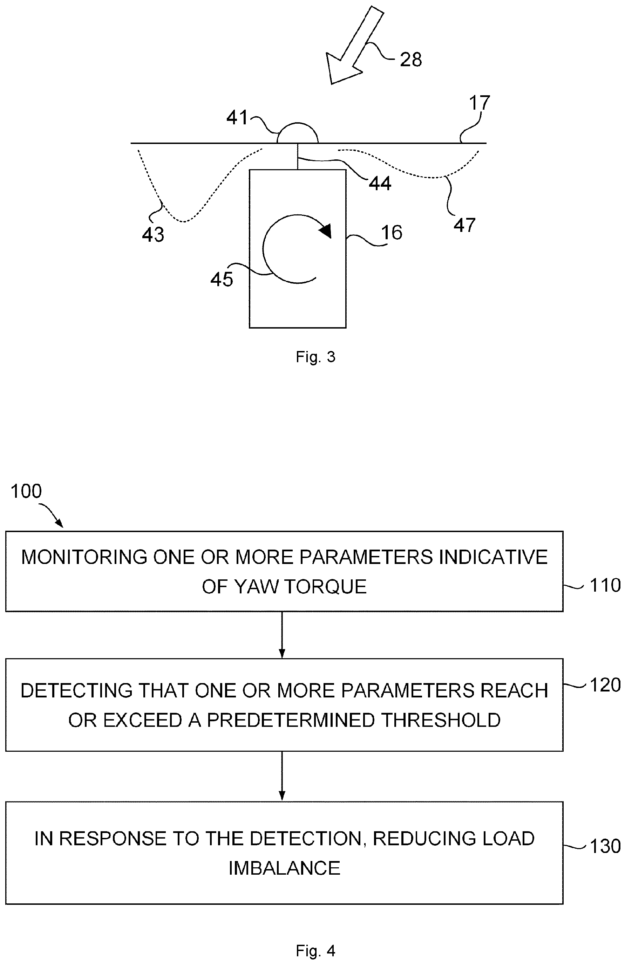

Figure 3 schematically represents a top view of a wind turbine 10. In particular, the nacelle 16, the main shaft 44, a rotor plane 17 and a spinner 41 are illustrated. The wind turbine may be an onshore wind turbine as well as an offshore wind turbine. The dotted curves schematically represent a load distribution experienced by a wind turbine blade 22 of the wind turbine rotor 18 when the blade is in the plane of figure 3.

In this illustrative example the wind comes from the top right side of the figure, as indicated by the arrow 28. The dotted curves illustrate that the loads experienced by the rotor 18 are not balanced in this example: when a blade 22 crosses the plane of the figure to the left of the main shaft 44, the blade experiences in general a higher load, see curve 43, than when it crosses the plane of the figure to the right side of the main shaft 44, see curve 47. As the wind turbine rotor 18 is misaligned with the wind direction 28, the wind acts differently on both sides of the rotor 18, causing load imbalance.

Figure 3 also illustrates a possible yawing direction 45. For example, if the wind comes from the top right side of the figure, during operation the wind turbine 10 will try to rotate in the direction 45 shown for aligning the spinner 41 (and thus the rotational axis of the rotor hub) with the wind direction. The wind turbine may rotate in the opposite direction in other examples, e.g. if the wind comes from the top left side of the figure.

As long as the nacelle 16 is locked in place i.e. the yaw brakes are activated to maintain the nacelle in its orientation, the load imbalance illustrated schematically in figure 3 will generally not be problematic. When the brakes are released, the loads on the yaw drives may increase. Yawing causes a yaw torque about an axis perpendicular to the plane of figure 3. As the wind turbine rotor 18 is not aligned with the wind direction 28, the wind may affect the forces exerted on the rotor 18 and therefore affect the yaw torque that is required to be able to orient the nacelle in the desired direction.

A sudden change of wind direction during the yawing maneuver of the wind turbine 10, and therefore a sudden change of the load distribution experienced by the wind turbine rotor 18, may cause that one or more wind turbine components, e.g. one or more wind turbine blades 22, may be damaged or may even break. In some examples, one or more of the following may particularly be at increased risk of being damaged: one or more pitch drive systems 68, the yaw system (particularly the yaw drives) and the nacelle frame 52.

In this disclosure, one or more parameters indicative of yaw torque are used as an indicator of the level of loads that the wind turbine is subjected to while yawing. Higher values of one or more of these parameters may indicate that the wind turbine is experiencing high loading and levels of stress, whereas lower values may indicate that the wind turbine is experiencing less loads and stress.

In an aspect of the disclosure, a method 100 for protecting one or more components of a wind turbine during yawing of the wind turbine is provided. The method 100 is schematically illustrated in the flowchart of figure 4. The method comprises, at block 110, monitoring one or more parameters indicative of yaw torque. The yaw torque may be regarded as the torque necessary to orient the wind turbine rotor with respect to the prevailing wind direction. The yaw torque may vary during a yawing procedure as a function of *inter alia* wind direction and wind speed.

The method further comprises, at block 120, detecting that one or more of the parameters indicative of yaw torque reach or exceed a predetermined threshold. The method further comprises, at block 130 and in response to the detection, reducing load imbalance in the wind turbine rotor 18.

According to this aspect, one or more parameters which give an indication of yaw torque are monitored, e.g. while the wind turbine is yawing. When a predetermined threshold for one or more of these parameters is reached or exceeded, rotor load imbalance is reduced. Such a load imbalance reduction may help to decrease the risk of damage to one or more wind turbine components during yawing and to facilitate a successful yawing procedure. This method may be cost effectively and easily implemented.

The monitoring may be performed at suitable predetermined time intervals in some examples, e.g. each several seconds or minutes, e.g. each 3 seconds, 5 seconds, 10 seconds, 30 seconds or each minute or more.

One or more parameters indicative of yaw torque may be monitored in one or more wind turbine components. In some examples, yaw torque may be measured or calculated. In these or other examples, other parameters may be measured or calculated.

Reaching or exceeding a corresponding predetermined threshold may comprise reaching or exceeding the threshold more than once, e.g. reaching it or exceeding it more than once or reaching it or exceeding it during a certain minimum period of time. In some examples, reaching or exceeding the threshold may comprise that an average of a set of values of a monitored parameter reaches or exceeds the threshold during a certain period of time.

In some examples, monitoring one or more parameters indicative of yaw torque may comprise monitoring one or more yaw drives 35, optionally one or more yaw motors 33. As yaw drives 35 are directly involved in yawing the nacelle, monitoring them may provide relevant and accurate information about stress caused by yawing in a simple manner. Moreover, the yaw motors 33 can be relatively easily monitored since suitable sensors like voltage/current sensors and suitable encoders are already present.

In some of these examples, the torque of one or more yaw motors 33 may be monitored. For instance, the torque of a plurality of the yaw motors or all the yaw motors 33 of the wind turbine may be monitored. While the wind turbine rotor 18 is aligned with the prevailing wind direction 28, both the brake calipers and the brakes of the yaw motors are generally used for keeping such alignment. However, after the calipers are released, the yaw motors have to provide the torque necessary to rotate the nacelle and at the same time withstand the load imbalance illustrated before. The yaw motors 33 may therefore be subjected to relatively high loads. In some cases, the yaw motors 33 may pass an operational threshold during the yaw maneuver. The yaw drives may be configured to provide a certain yaw speed (e.g. a number of degrees per minute) in a direction. While attempting to provide such a yaw speed e.g. in clockwise direction, loads on the wind turbine may actually push or force the wind turbine in counterclockwise direction. This may excessively stress the yaw drives or motors and possibly cause problems in the yaw drives themselves and in other components of the wind turbine. For example, the pitch system may be negatively affected and the pitch drive systems 68 may be damaged.

It may also happen that the yaw motors 33 are not able to withstand the loads, e.g. forces, to which they are subjected during yawing. One or more of the yaw motors may therefore possibly fail and break. In some cases, the yaw motors may not be capable of causing a sufficient rotational force about the yaw axis 38. This may also potentially cause problems in other wind turbine components. For example, a force exerted by the wind on a wind turbine blade 22 of a misaligned wind turbine rotor 18 may oppose a force exerted by the pitch system. Pitching may become more difficult, and the pitch motors may be subject to higher loads.

Accordingly, monitoring one or more yaw drives 35, e.g. one or more yaw motors 33, e.g. the torque of one or more of the yaw motors, may be an effective manner to check whether the yaw system is able to withstand the loads and stresses during yawing as well as to provide a sufficient driving force. The predetermined threshold may in some of these examples be of 80% or more, e.g. of 90% or more, of a nominal torque of a corresponding yaw motor. If a yaw motor has a certain value of nominal, i.e. maximum, torque, triggering a reduction in rotor load imbalance when an 80% of such value has been reached or exceeded may help to reduce stress of the yaw motor before a damage is produced. The service life of the yaw motor, and possibly of other components such as the pitch system, may therefore be extended in comparison to letting the yaw motor to excessively suffer.

Monitoring a torque, in this and in other examples, may comprise measuring torque, e.g. with one or more torque sensors. A torque sensor may use strain gauge technology to measure torque. Torque values may also be calculated in some examples. In some examples, a power output of a yaw motor and a rotational speed of the yaw motor may be used to calculate the torque of the yaw motor. In other examples, the torque of the yaw motor may be derived from the motor current(s). In general, any suitable way of measuring or calculating torque, and in general a magnitude referred throughout this disclosure, may be used. Optionally, a parameter indicative of yaw loads may be directly measured and/or calculated or otherwise derived from a measurement.

One or more additional or alternative measurements may be performed in one or more yaw drives 35. For example, one or more of currents of one or more of the yaw motors 33 and bending and/or torsion of a shaft of one or more yaw drives 35, may additionally or alternatively be measured. An ammeter may e.g. be used to measure current levels.

Alternatively or additionally to monitoring one or more yaw drives 35, one or more pitch drive systems 68 may be monitored. For example, monitoring a parameter indicative of yaw torque may comprise monitoring one or more pitch drive motors 74, e.g. a current of one or more pitch drive motors 74, e.g. of all pitch motors. As the wind direction 28 affects the force to which the wind turbine rotor 18 is subjected, and therefore also affects the yaw torque, monitoring the pitch system may also be an effective and easy way to gather information related to yaw torque. The current of the pitch motors may usually be monitored while the wind turbine is operated, e.g. while monitoring the pitch system 32 for keeping or changing to a suitable pitch angle. Therefore, using the current of the pitch drive motors 74 for obtaining information about yaw torque may be easy, simple, and may not require physical changes to one or more wind turbine components.

The same or similar advantages may apply to other parameters which the wind turbine usually tracks. For instance, if a torque of the yaw motors 33 is usually monitored during wind turbine operation, it may be easy and convenient to use this parameter to obtain information about yaw torque. In examples, no additional sensors or measuring systems are needed to implement any of the methods herein disclosed.

Each wind turbine blade 22 may be pitched independently from the other blades 22 of the wind turbine 10 in some examples. The wind may affect each wind turbine blade 22 differently, and each blade 22 may therefore be controlled differently depending on the results of monitoring each pitch drive system 68. If the monitoring of a specific pitch drive system 68 indicates that a specific blade 22 is subjected to higher loads than the other blades, this blade may be pitched differently, e.g. more, than the other blades.

One or more additional or alternative measurements may be performed in one or more pitch drive systems 68. For example, one or more of the torque of one or more of the pitch drive motors 74 and bending and/or torsion of a shaft of one or more pitch drive systems 68, may be additionally or alternatively measured.

Additionally or alternatively to monitoring one or more parameters indicative of yaw torque as explained above, monitoring one or more parameters indicative of yaw torque may comprise monitoring yaw torque, e.g. in a main shaft 44 of the wind turbine 10. Monitoring deformation of the main shaft 44 may therefore give information about yaw torque. One or more proximity sensors, e.g. a plurality of inductive sensors, may be arranged on the main shaft 44 for monitoring its deformation.

In general, one or more suitable shaft sensors 51 may be used for monitoring the deformation of the main shaft 44. Shaft sensors 51 may for example include one or more torque sensors (e.g., strain gauges or pressure sensors), optical sensors, accelerometers, magnetic sensors, and/or Micro-Inertial Measurement Units (MIMUs). A shaft sensor 51 may additionally or alternatively be configured to monitor a rotational speed of the main shaft 44.

Still in the above examples or in other examples, monitoring a parameter indicative of yaw torque may comprise monitoring a force exerted by the incoming wind on the wind turbine rotor 18. In some of these examples, one or more suitable sensors may be arranged on one or more wind turbine blades 22 for measuring or allowing to calculate such a force. One or more of the previously mentioned shaft sensors may be used. As the sensors would be arranged on a wind turbine blade, they may be referred to as wind turbine blade sensors instead of shaft sensors.

Load imbalance in the wind turbine rotor 18 may be reduced by reducing power output of the wind turbine 10 in some examples. Reducing power output may decrease the forces exerted on the rotor 18, and therefore yaw torque. In some examples, reducing power may comprise pitching one or more of the blades 22, e.g. all the blades, and e.g. in the direction of a feathered position (without actually reaching such feathered position), i.e. away from the wind. Pitching one or more wind turbine blades 22 may be an easy, fast and reliable way of reducing the power output and load imbalance of the rotor 18.

Also, as the pitch drive system 68 may be a wind turbine component which may have a high risk of being damaged during yawing if wind direction suddenly changes, pitching may be particularly useful for reducing the risk of damage of the pitch drive system 68, and possibly of a blade 22, which may break under excessive stress.

In some examples, the power output may be kept below a power threshold until yawing is ended. In this manner, power may be sufficiently reduced for minimizing the risk of damage during the whole time period in which the risk of damage is increased. A safer yawing may be achieved in comparison with removing the power threshold immediately after an event causing a risk peak, e.g. a wind direction has suddenly changed or wind has blown particularly strong, ends.

Regardless of keeping a power output below a power threshold until yawing is ended or not, the power output may be reduced by 20% or more, specifically by 30% or more, and more specifically by 40% or more. This power reduction is with respect to a power output before detecting that a parameter indicative of yaw torque has reached or exceeded a predetermined threshold. For example, if the wind turbine 10 was generating X Megawatt, the power may be reduced by 35% of the X Megawatt. Reducing the power output between 30% and 50%, and more specifically between 30% and 40% may provide a suitable balance between sufficiently diminishing the risk of damage without excessively reducing the power output.

The power output of the wind turbine may be reduced in other suitable ways in other examples. For instance, the rotational speed of the wind turbine rotor 18 may additionally or alternatively be reduced. In examples, the power output of the wind turbine may be reduced while maintaining the rotational speed of the wind turbine rotor substantially constant.

In general, the torque applied to the wind turbine generator 42 and/or the pitch angle of the wind turbine blades 22 may be controlled to decrease the power output of the wind turbine 10. In some examples, the generator torque may be adjusted to reduce the rotational speed of the wind turbine rotor 18 and the power output. Alternatively or in addition hereto, the wind turbine blades 22 may be pitched away of the wind i.e. they are pitched so as to decrease their angle of attack. In some of these examples, the rotational speed of the wind turbine rotor 18 may be reduced as well. In other examples the rotational speed of the wind turbine rotor 18 may be kept substantially at a previous level (before starting the reduction of power output), e.g. by reducing the torque applied to the wind turbine generator 42. One or more generator sensors 53 may be configured to monitor at least one of a rotational speed of the generator 42 and a torque applied to the generator.

The method may further comprise increasing power output after the yawing has ended, e.g. immediately after yawing is ended. I.e. standard operation may be resumed. A maximum power production according to the prevailing wind conditions may therefore be achieved after the peaks of high risk during yawing have ended. A good balance between maximizing power production and minimizing risks may be attained.

In some examples, reducing load imbalance in the wind turbine rotor may comprise reducing thrust. For example, the wind turbine blades 22 may be pitched away of the wind and/or the torque applied to the generator 42 may be decreased. In this manner, power output may be reduced, and load imbalance may also be reduced. In some examples, a thrust limit may be reduced.

In these or other examples, monitoring one or more parameters indicative of yaw torque may comprise monitoring thrust, and detecting that one or more of the parameters indicative of yaw torque reach or exceed a predetermined threshold may comprise detecting that thrust reaches or exceeds a thrust limit. A thrust limit may be defined according to techniques known in the art. In some examples, one or more shaft sensors 51 may be used to measure thrust, or to measure parameters to be used for calculating thrust.

In some examples, monitoring the parameters indicative of yaw torque may comprise monitoring before the yawing. Monitoring before the yawing of the wind turbine 10 may help to identify certain conditions or patterns indicative of increased risk during the subsequent yawing already before the yawing has started. A potential risk for the wind turbine may therefore be recognized, even before starting to yaw the wind turbine and therefore appropriate measures may be taken as early as possible. The monitoring may include one or more of the examples already mentioned before, e.g. monitoring one or more yaw drives and/or monitoring one or more pitch drive systems (e.g. currents, torque, setpoints or other). The monitoring may further include monitoring one or more parameters related to the wind, e.g. wind direction, turbulence, wind veer and/or wind speed.

In some examples, detecting that the parameters indicative of the yaw torque reach or exceed a predetermined threshold takes place before the yawing. One or more of the detected parameters may be estimated parameters. Herein, an estimated parameter, e.g. an estimated required yaw torque, may be understood as a parameter which has been calculated based on a data history with the help of a machine learning algorithm. With a suitable machine learning algorithm, the monitored parameters may be used to estimate if the subsequent yawing may pose an increased risk for the wind turbine. Past data from the wind turbine and/or past data from other wind turbines, e.g. of a same wind turbine park, may be analyzed. In this manner, an excessive risk for the wind turbine may be detected based on certain conditions or patterns identified by the machine learning algorithm. In some examples, instead of one or more specific parameters surpassing a threshold, a combination of multiple parameters may be recognized based on an algorithm defined after a machine learning process.

In some of these examples, a required yaw torque to position the wind turbine rotor 18 with respect to the prevailing wind direction may be estimated. The estimated required yaw torque may be indicative of a risk of the subsequent yawing given e.g. the loads experienced by the wind turbine and the wind conditions. For instance, if the same wind turbine or another wind turbine has previously been in a same or similar situation (e.g. of experienced loads and/or wind conditions) and subsequent yawing failed or was problematic, the machine learning algorithm may identify this and action may be taken before the wind turbine is yawed, in anticipation of possible problems. This may also be applicable to any suitable estimated parameter.

According to another aspect of the disclosure, a wind turbine 10 comprising a tower 15, a nacelle 16 rotatably mounted on top of the tower 15, a wind turbine rotor 18 including a plurality of wind turbine blades 22 and a yaw system is provided. The wind turbine is configured to perform the methods 100 and 200 (see below for method 200) as described throughout this disclosure.

For example, the wind turbine 10 is configured to rotate the nacelle with respect to the tower to substantially align an axis of rotation of the rotor with a prevailing wind direction, to monitor one or more parameters indicative of yaw torque while rotating the nacelle, to detect that one or more of the parameters indicative of yaw torque reaches or exceeds a predetermined threshold, and in response to the detection, to reduce load imbalance in the wind turbine rotor 18.

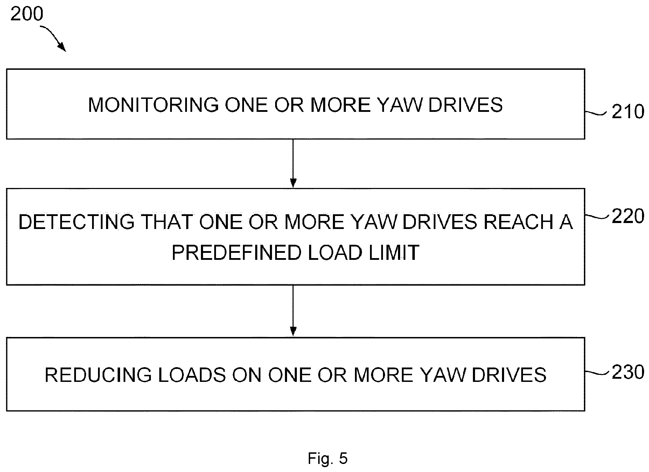

According to another aspect of the disclosure, a method 200 for operating a wind turbine during yawing is provided. The method 200 is schematically illustrated in the flowchart of figure 5. The method comprises, at block 210, monitoring one or more yaw drives 35 while the wind turbine 10 is yawing. The method further comprises, at block 220, detecting that one or more of the yaw drives 35 reach a predefined load limit. The method further comprises, at block 230, reducing loads on one or more of the yaw drives.

Monitoring one or more yaw drives 35 may comprise monitoring one or more yaw motors 33. In other examples, other elements, pieces of portions of a yaw drive may be monitored.

Monitoring one or more yaw motors 33, e.g. all yaw motors 33, may comprise monitoring torque of the one or more yaw motors 33. In other examples, other magnitudes of the one or more yaw motors may be additionally or alternatively be monitored. Such a magnitude may for example be the current(s) in the yaw motors.

Reducing loads on the one or more yaw drives may comprise reducing the power output of the wind turbine 10. One or more wind turbine blades 22 may be pitched (slightly) towards a feathered position (without actually reaching the feathered position) in some examples. Other ways of reducing loads and/or other ways of reducing the power output of the wind turbine may be possible in other examples.

The power output of the wind turbine may be kept reduced, e.g. below a power threshold, until yawing finishes. The power output of the wind turbine may be increased once yawing has finished.

Details and explanations of method 200 may be combined with and applied to method 100 and *vice versa.*

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for protecting one or more components of a wind turbine (10) during yawing of the wind turbine (10), the method comprising:
monitoring (110) one or more parameters indicative of a yaw torque required to position a wind turbine rotor with respect to a prevailing wind direction;
detecting (120) that one or more of the parameters indicative of the yaw torque reach or exceed a predetermined threshold; and
in response to the detection, reducing (130) load imbalance in the wind turbine rotor (18).

2. The method of claim 1, wherein monitoring (110) the parameters indicative of yaw torque comprises monitoring one or more yaw drives (35).

3. The method of claim 2, wherein monitoring one or more yaw drives (35) comprises monitoring one or more yaw motors (33).

4. The method of claim 3, wherein monitoring one or more yaw motors (33) comprises monitoring a torque of one or more of the yaw motors (33).

5. The method of any of the preceding claims, wherein monitoring (110) the parameters indicative of yaw torque comprises monitoring one or more pitch drive systems (68).

6. The method of claim 5, wherein monitoring one or more pitch drive systems (68) comprises monitoring one or more pitch drive motors (74).

7. The method of claim 6, wherein monitoring one or more pitch drive motors (74) comprises monitoring current of one or more of the pitch drive motors (74).

8. The method of any of the preceding claims, wherein monitoring (110) the parameters indicative of yaw torque comprises monitoring yaw torque in a main shaft (44) of the wind turbine (10).

9. The method of any of the preceding claims, wherein reducing (130) load imbalance in the wind turbine rotor (18) comprises reducing power output of the wind turbine (10).

10. The method of claim 9, wherein reducing power output comprises pitching one or more wind turbine blades (22).

11. The method of claim 9 or claim 10, wherein the power output is kept below a power threshold until yawing is ended.

12. The method of any of claims 9 - 11, further comprising increasing power output after the yawing has ended.

13. The method of any of the preceding claims, wherein reducing (130) load imbalance in the wind turbine rotor (18) comprises reducing thrust on the wind turbine rotor.

14. The method of any of the preceding claims, wherein monitoring (110) the parameters indicative of yaw torque comprises monitoring before the yawing.

15. A wind turbine (10) comprising a tower (15), a nacelle (16) rotatably mounted on top of the tower (15), a wind turbine rotor (18) including a plurality of wind turbine blades (22) and a yaw system, the wind turbine (10) being configured to:
rotate the nacelle (16) with respect to the tower (15) to substantially align an axis of rotation of the wind turbine rotor (18) with a prevailing wind direction;
monitor, while rotating the nacelle (16), one or more parameters indicative of a yaw torque required to substantially align the axis of rotation of the wind turbine rotor (18) with the prevailing wind direction;
detect that one or more of the parameters indicative of yaw torque reach or exceed a predetermined threshold; and
reduce load imbalance in the wind turbine rotor (18) if one or more of the parameters indicative of yaw torque reach or exceed the predetermined threshold.
